# EUROPEAN PATENT SPECIFICATION

(11) **EP 3 611 906 B1**
(45) Date of publication and mention of the grant of the patent: **20.10.2021**
(21) Application number: 18784721.5
(22) Date of filing: 14.03.2018
(51) Int. Cl.: H04L 29/12

(54) **IP ADDRESS CONFIGURATION METHOD AND DEVICE**
IP-ADRESSKONFIGURATIONSVERFAHREN UND VORRICHTUNG
PROCÉDÉ ET DISPOSITIF DE CONFIGURATION D'ADRESSE IP

(30) Priority: 13.04.2017 CN 201710239458
(43) Date of publication of application: 19.02.2020
(73) Proprietor: Datang Mobile Communications Equipment Co., Ltd., Beijing 100085 (CN)
(72) Inventor: CHENG, Zhimi, Beijing 100191 (CN); HU, Weiqi, Beijing 100191 (CN); XU, Hui, Beijing 100191 (CN)
(74) Representative: Studio Torta S.p.A.
(86) International application number: PCT/CN2018/079000
(87) International publication number: WO 2018/188447

(56) References cited:
- EP-A1- 3 139 565
- CN-A- 101 534 493
- CN-A- 106 341 812
- US-A- 6 130 892
- US-B1- 8 914 810
- ALCATEL-LUCENT ET AL: "Further details for Stateless Gateway solution (resubmission of S2-130785)", 3GPP DRAFT; S2-131729 23887 STLSS GW, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Busan, Korea; 20130527 - 20130531 21 May 2013 (2013-05-21), XP050708915, Retrieved from the Internet: URL:http://www.3gpp.org/ftp/tsg_sa/WG2_Arc h/TSGS2_97_Busan/Docs/ [retrieved on 2013-05-21]
- ALCATEL-LUCENT: "Evaluation for IP addressing", 3GPP DRAFT; S2-112166, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Bratislava; 20110411, 18 April 2011 (2011-04-18), XP050524812, [retrieved on 2011-04-18]

## Description

### TECHNICAL FIELD

The present disclosure relates to the field of communication technology, and in particular to an IP address configuration method and an IP address configuration device.

### BACKGROUND

Currently, in an Evolved Packet System (EPS), a Mobility Management Entity (MME) may support a Mobility Management (MM) function and a Session Management (SM) function simultaneously. The MM function is, for example, attachment, tracking area update, etc., and the SM function is, for example, establishment, modification, and deletion of a public data network connection. A MM message and a SM message transmitted by a User Equipment (UE) are both terminated in the MME and processed by the MME.

In order to improve a modularity of the network, in the fifth-generation mobile communication (5^{th} Generation, 5G) system, the MM (mobility management) function and the SM (session management) function exist as two independent functional modules, and the 5G network supports a separation of controlling and forwarding of a gateway, as well as a separation of MM and SM. The main functions of a MM function entity include user registration, UE-unreachable discovery, location registration, UE state transition, connected state and inactive state mobility, UE mobility restriction, UE mobility management control, anchor point selection, establishment of a user plane path, etc. The main functions of a SM function entity are data packet forwarding and detection, session control, selection of user plane functions, allocation of UE IP address (connection type being IP), etc. Signaling interaction between the MM function entity and the SM function entity is required to realize information interaction and coordination.

When the User Equipment (UE) transmits data to a network, it is generally required to encapsulate an IP address into the data. The IP address is allocated by the network to the UE and transmitted to the UE. At present, the commonly used network allocates an IP address to the UE by: allocating an IP address to the UE when the UE is attached to the network; or allocating an IP address to the UE when the network receives the data transmitted by the UE. The method for allocating an IP address to the UE when the UE is attached to the network has satisfied the requirement of allocating an IP address to the UE, but in a case that the UE is the user of a certain type of Internet of Things (IoT), such as an in-vehicle device, this method will not be adapted to a change of an anchor point of the UE. The method for allocating an IP address to the UE when the network receives the data transmitted by the UE may be adapted to the change of the anchor point of the UE, but when the UE has a large-range movement, each time the IP address is renewed, signaling overhead will be increased. Correspondingly, the UE needs to frequently configure and maintain the IP address, thereby increasing a processing load on the UE. Moreover, when a service is provided to a group of UEs, such as users of IoT, the current method for allocating an IP address to the UE requires the network to perform signaling interaction with each UE to complete the configuration of IP address of the UE, leading to a large signaling overhead. Patent document US 6,130,892 discloses a nomadic router or translator which enables a laptop computer or other portable terminal which is configured to be connected to a home network to be connected to any location on the internet or other digital data communication system. The router includes a processor which appears as the home network to be terminal, and appears as the terminal to the communication system. The terminal has a permanent address, the router has a router or translator address, and the terminal transmits outgoing data to the system including the permanent address as a source address. The processor translates the outgoing data by replacing the permanent address with the router address as the source address. The terminal receives incoming data from the system including the router address as a destination address, and the processor translates the incoming data by replacing the router address with the permanent address as the destination address. Document by Alcatel-Lucent, titled "Further details for Stateless Gateway solution", S2-131729, 3GPP SA WG2 Meeting #97, 27-31 May 2013, discloses an extension whereby the MME assigns the device a local IP address that is unique across the MMEs and with NAT support in the CGW, i.e. with the CGW creating NA(P)T bindings as necessary to translate the local source address, port and transport protocol combination from the device into an APN-wide address and port combination with the same protocol. Such an extension could possibly simplify the configuration by removing the need for coordinating and partitioning the APN's IP address pools among MMEs, would allow the UE to retain the same local IP address as it moves to a different CGW or MME and thus also ease service restoration after a network (MME or CGW) failure.

Document by Alcatel-Lucent, titled "Evaluation for IP addressing", S2-112166, 3GPP TSG SA WG2 Meeting #84, 11-15 April 2011, discloses the P-GW allocating a public address to an MTC device and informing the MME thereof; the position of the NAT function in the network is undefined. SGSN/MME needs to notify the HSS of the MTC device's private address "D" and the NAT device's public address "N" (e.g. new parameters in the Notify Request message).

However, the above-mentioned issues remain unsolved.

### SUMMARY

The present invention relates to an IP address configuration method and an IP address configuration device, as defined in the annexed claims.

### BRIEF DESCRIPTION OF THE DRAWINGS

In order to illustrate the technical solutions of embodiments of the present disclosure in a clearer manner, the drawings desired for the embodiments of the present disclosure will be described hereinafter briefly. Obviously, the following drawings merely relate to some embodiments of the present disclosure, and based on these drawings, a person skilled in the art may obtain other drawings without any creative effort.
Fig.1 is a flowchart showing an IP address configuration method according to an embodiment of the present disclosure;
Fig.2 is a flow chart showing a process of replacing a source IP address of first data according to an embodiment of the present disclosure;
Fig.3 is a flow chart showing another process of replacing a source IP address of first data according to an embodiment of the present disclosure;
Fig.4 is a flow chart showing a data transmission process of a first example of the present disclosure;
Fig.5 is a flow chart showing a data transmission process of a second example of the present disclosure;
Fig.6 is a flow chart showing a data transmission process of a third example of the present disclosure;
Fig.7 is a flow chart showing a data transmission process of a fourth example of the present disclosure;
Fig.8 is a flow chart showing a data transmission process of a fifth example of the present disclosure;
Fig.9 is a flow chart showing a data transmission process of a sixth example of the present disclosure;
Fig.10 is a flow chart showing a data transmission process of a seventh example of the present disclosure;
Fig.11 is a flow chart showing a data transmission process of an eighth example of the present disclosure;
Fig.12 is a flow chart showing a data transmission process of a ninth example of the present disclosure;
Fig.13 is a flow chart showing a data transmission process of a tenth example of the present disclosure;
Fig.14 is a schematic structural view of an IP address configuration device according to an embodiment of the present disclosure;
Fig.15 is a schematic structural view of an IP address configuration device according to an embodiment of the present disclosure;
Fig.16 is a schematic structural view of an IP address configuration device according to an embodiment of the present disclosure;
Fig.17 is a schematic structural view of an IP address configuration device according to an embodiment of the present disclosure; and
Fig.18 is a schematic structural view of a network function entity according to an embodiment of the present disclosure.

### DETAILED DESCRIPTION

The technical solutions in the embodiments of the present disclosure are clearly and completely described hereinafter with reference to the accompanying drawings in the embodiments of the present disclosure.

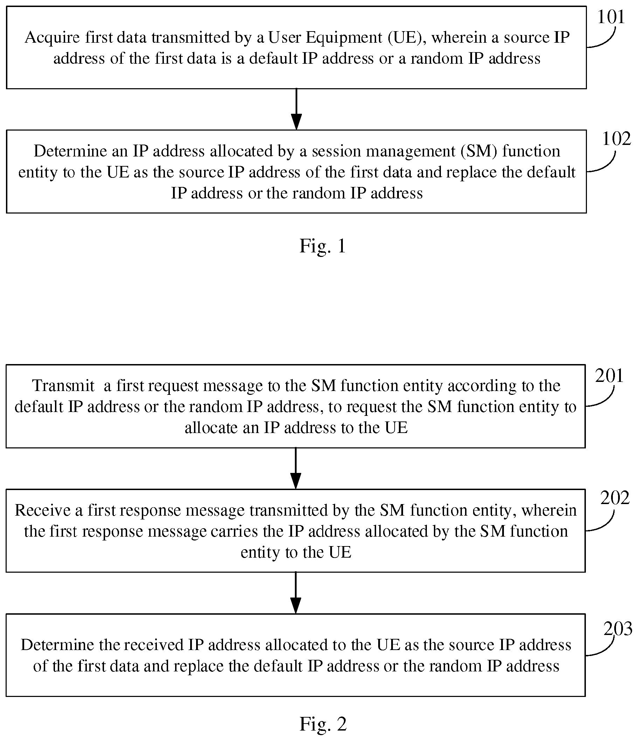

As shown in Fig.1, the invention provides an IP address configuration method, which is applied to a network function entity. The method includes steps 101 to 102, which will be described in detail as follows:
Step 101: acquiring first data transmitted by a User Equipment (UE), wherein a source IP address of the first data is a default IP address or a random IP address.
   The network function entity of the embodiment of the present disclosure may either be a MM function entity or a SM function entity. When the UE transmits the first data to the network, the first data does not carry the IP address allocated by the network to the UE, and instead a default IP address or a random IP address is determined as the source IP address of the first data. In this way, after the IP address is allocated by the network to the UE, the IP address allocated to the UE may not be transmitted to the UE, and therefore the UE does not need to perform the configuration and maintenance of the IP address, thereby reducing the burden of the UE in processing the IP address.
Step 102: determining an IP address allocated by a session management (SM) function entity to the UE as the source IP address of the first data and replacing the default IP address or the random IP address.

After the network function entity acquires the first data transmitted by the UE, it will replace the source IP address of the first data with the IP address allocated by the SM function entity to the UE, that is, the default IP address or the random IP address originally carried is replaced and transmitted to a data network. In this way, although the UE does not carry the IP address allocated by the SM function entity to the UE in the source IP address of the first data, the network function entity has updated the source IP address of the first data, so the data network will obtain data carrying the correct IP address (i.e., the IP address allocated to the UE).

In the IP address configuration method of the present invention, the network function entity determines a source IP address of data transmitted by the UE and replaces the source IP address which is a default IP address or a random IP address, so the UE is prevented from acquiring in real time the IP address allocated by the SM function entity to the UE, and the source IP address of the transmitted data is prevented from carrying the IP address allocated by the SM function entity to the UE. Therefore, the method can be adapted to a change of an anchor point of the UE, and the IP address can be flexibly configured. Moreover, as compared to existing methods for allocating an IP address to the UE, the present method can reduce the signaling overhead when the IP address is renewed. The UE does not need to perform the configuration and maintenance of the IP address, and the processing load on the UE is reduced. Especially when a service is provided by the network to a group of UEs, it is not required for the network to perform signaling interaction with each UE to complete the configuration of IP address of the UE, thereby reducing signaling overhead of UE configuration.

In the above embodiment, a basic flow of the IP address configuration method of the present disclosure is described. The IP address configuration method of the embodiment of the present disclosure will be described below in a case that the execution body is a MM function entity or a SM function entity respectively.

In the present invention the execution body of the IP address configuration method is a MM function entity. After the MM function entity receives the first data transmitted by the UE, it is determined that a SM function entity will be selected for the UE, according to the default IP address or the random IP address in the first data, or according to timing out of a timer corresponding to the UE (the timer is usually restarted when the MM function entity has completed forwarding the data transmitted by the UE, referring to a time duration in which the UE does not transmit data), and a SM function entity will be selected for the UE according to the information of the UE. The information of the UE may include at least one of UE subscription information, UE location information, UE type information and other UE auxiliary information.

After the MM function entity has selected the SM function entity for the UE, the MM function entity may transmit a request message (for example, a session creation request message) to the selected SM function entity to request the SM function entity to allocate an IP address to the UE, and the MM function entity receives a response message carrying the IP address allocated by the SM function entity to the UE and transmitted by the SM function entity, for example, a session creation response message, so as to replace the default IP address or the random IP address in the first data. When the SM function entity allocates an IP address to the UE, it can simultaneously create a UE context and select a user plane gateway UP-GW, etc., according to SM related information.

Specifically, as shown in Fig.2, after the MM function entity has received the first data transmitted by the UE, the process of determining the IP address allocated by the SM function entity to the UE as the source IP address of the first data and replacing the default IP address or the random IP address includes the following steps: step 201: transmitting a first request message to the SM function entity according to the default IP address or the random IP address, to request the SM function entity to allocate an IP address to the UE;
step 202: receiving a first response message transmitted by the SM function entity, wherein the first response message carries the IP address allocated by the SM function entity to the UE; and
step 203: determining the received IP address allocated to the UE as the source IP address of the first data and replacing the default IP address or the random IP address;
wherein the first request message may be a session creation request message, and the first response message may be a session creation response message.

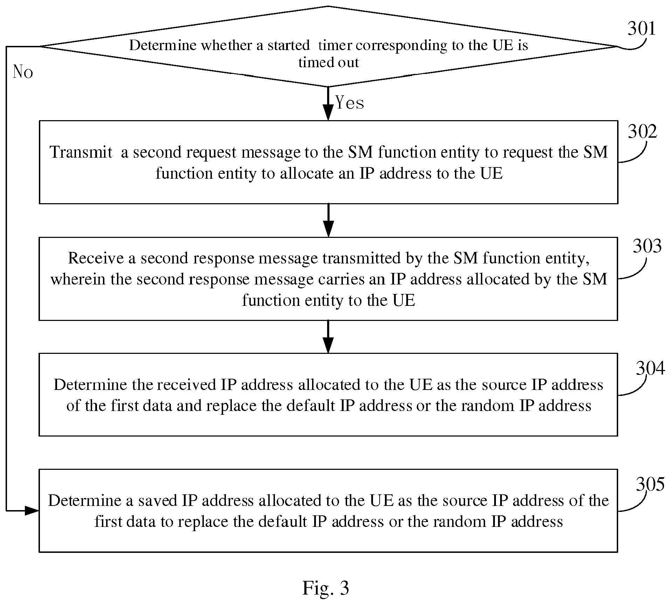

In the embodiment shown in Fig.2, the MM function entity transmits a request message to the SM function entity according to the default IP address or the random IP address. In addition to this, the MM function entity may also transmit a request message to the SM function entity according to timing out of a timer corresponding to the UE, as shown in the embodiment of Fig.3.

Specifically, as shown in Fig.3, after the MM function entity has received the first data transmitted by the UE, the process of determining the IP address allocated by the SM function entity to the UE as the source IP address of the first data and replacing the default IP address or the random IP address may include the following steps:
step 301: determining whether a started timer corresponding to the UE is timed out;
step 302: transmitting a second request message to the SM function entity to request the SM function entity to allocate an IP address to the UE, in a case that the timer is timed out;
step 303: receiving a second response message transmitted by the SM function entity,
   wherein the second response message carries an IP address allocated by the SM function entity to the UE;
step 304: determining the received IP address allocated to the UE as the source IP address of the first data and replacing the default IP address or the random IP address; and
step 305: determining a stored IP address allocated to the UE as the source IP address of the first data and replacing the default IP address or the random IP address, in a case that the timer is not timed out;
wherein the second request message may be a session creation request message, and the second response message may be a session creation response message. The step 302 may specifically include:
selecting a matched SM function entity for the UE according to the information of the UE, in a case that the timer is timed out; and
transmitting a second request message to the selected SM function entity, to request the SM function entity to allocate an IP address to the UE.

In the IP address configuration method of the embodiment of the present disclosure, after replacing the source IP address of the first data, the MM function entity may further execute the following steps.
transmitting second data to the SM function entity, wherein the second data is obtained by replacing the source IP address of the first data with the IP address allocated by the SM function entity to the UE, and wherein the difference between the first data and the second data only lies in the source IP address: the source IP address of the first data is a default IP address or a random IP address, and the source IP address of the second data is an IP address allocated by the SM function entity to the UE.

In this way, the SM function entity can forward the data carrying the IP address allocated by the SM function entity to the UE to the data network, thereby ensuring a normal data transmission process.

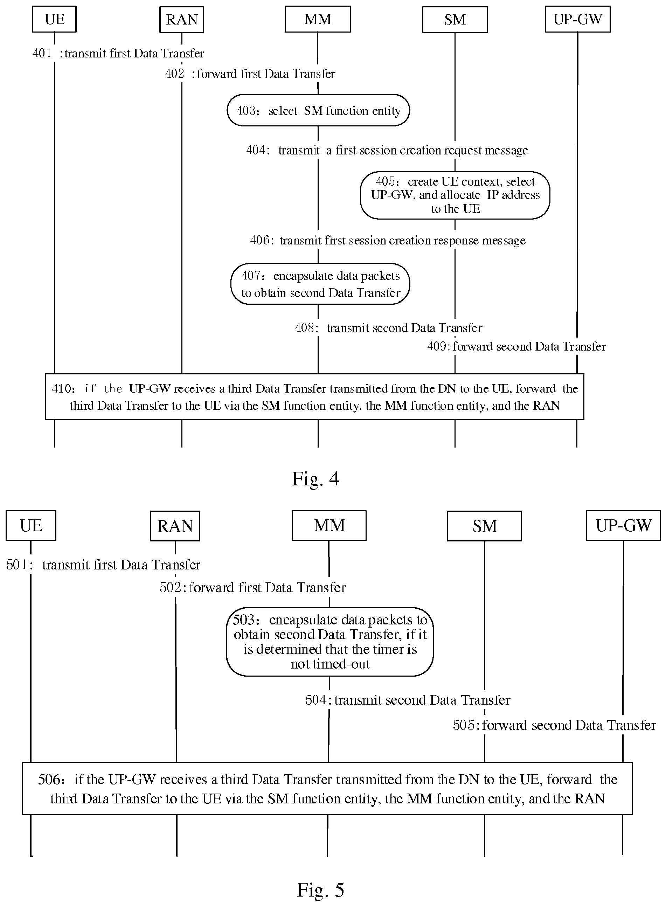

The data transmission processes of specific first and fourth examples of the present disclosure will be described below with reference to Figs. 4-7.

### First example

In the first example, in the scenario of updating the source IP address in the data by the MM function entity, a first-time data transmission process or the data transmission process in which the timer is timed-out is described.

Referring to Fig.4, the data transmission process of the first example includes the following steps:
Step 401: encapsulating, by the UE, the data to be transmitted into first transfer data (Data Transfer), wherein the source IP address (Source_IP) of the first Data Transfer is a default IP address or a random IP address; and transmitting the first Data Transfer to a RAN;
Step 402: forwarding, by the RAN, the first Data Transfer to the MM function entity;
Step 403: after the MM function entity receives the first Data Transfer, determining, by the MM function entity, that a SM function entity has to be selected for the UE, according to the default IP address or the random IP address, or in a case that the timer is timed-out (for a started timer of the UE); and selecting a SM function entity according to the information of the UE;
Step 404: transmitting a first session creation request message by the MM function entity to the selected SM function entity to request the SM function entity to create a session for the UE, wherein the information carried in the first session creation request message includes the UE being user of IoT and the SM related information;
Step 405: creating a UE context, selecting an UP-GW, and allocating an IP address to the UE by the SM function entity according to the SM related information;
Step 406: transmitting, by the SM function entity, a first session creation response message to the MM function entity, wherein the first session creation response message carries an IP address allocated to the UE;
Step 407: encapsulating, by the MM function entity, data packets according to the IP address allocated to the UE and carried in the received first session creation response message, i.e., determining the IP address allocated to the UE as the Source_IP of the first Data Transfer, and replacing the default IP address or the random IP address, to obtain a second Data Transfer;
Step 408: transmitting, by the MM function entity, the second Data Transfer to the selected SM function entity;
Step 409: forwarding, by the SM function entity, the second Data Transfer to the selected UP-GW, wherein the UP-GW may transmit the second Data Transfer to the data network (DN); and
Step 410: in a case that the UP-GW receives a third Data Transfer transmitted from the DN to the UE, forwarding the third Data Transfer to the UE via the SM function entity, the MM function entity, and the RAN.

### Second example

In the above first example, in the scenario of updating the source IP address in the data by the MM function entity, the first-time data transmission process or the data transmission process in which the timer is timed-out is described. However, in the actual data transmission process, there also exists a second-time data transmission process or a data transmission process in which the timer is not timed-out, such as in the second example. Referring to Fig.5, the data transmission process of the second example includes the following steps:
Step 501: encapsulating, by the UE, the data to be transmitted into first Data Transfer,
   wherein the Source_IP of the first Data Transfer is a default IP address or a random IP address; and transmitting the first Data Transfer to a RAN;
Step 502: forwarding, by the RAN, the first Data Transfer to the MM function entity;
Step 503: after the MM function entity receives the first Data Transfer, encapsulating, by the MM function entity, data packets in a case that the timer is determined to be not timed-out (for a started timer of the UE), i.e., determining the stored IP address allocated to the UE as the Source_IP of the first Data Transfer, and replacing the default IP address or the random IP address, to obtain a second Data Transfer;
Step 504: transmitting, by the MM function entity, the second Data Transfer to the selected SM function entity;
Step 505: forwarding, by the SM function entity, the second Data Transfer to the selected UP-GW, wherein the UP-GW may transmit the second Data Transfer to the data network (DN); and
Step 506: in a case that the UP-GW receives a third Data Transfer transmitted from the DN to the UE, forwarding the third Data Transfer to the UE via the SM function entity, the MM function entity, and the RAN.

### Third example

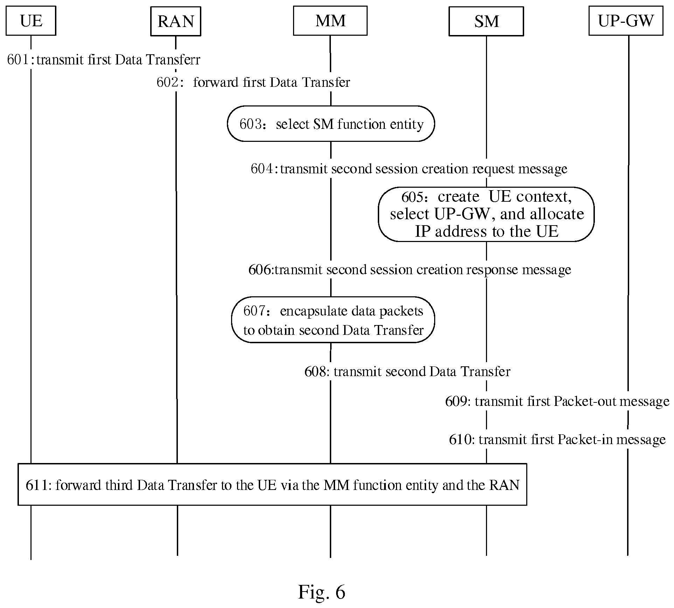

In the third example, in the scenario of updating the source IP address in the data by the MM function entity and using a core network which is based on a Software Defined Network (SDN) technology (using an Open Flow protocol), a first-time data transmission process or the data transmission process in which the timer is timed-out is described. Referring to Fig.6, the data transmission process of the third example includes the following steps:
Step 601: encapsulating, by the UE, the data to be transmitted into first Data Transfer,
   wherein the Source_IP of the first Data Transfer is a default IP address or a random IP address; and transmitting the first Data Transfer to a RAN;
Step 602: forwarding, by the RAN, the first Data Transfer to the MM function entity;
Step 603: after the MM function entity receives the first Data Transfer, determining, by the MM function entity, that a SM function entity has to be selected for the UE, according to the default IP address or the random IP address, or in a case that the timer is timed-out (for a started timer of the UEfor a started timer of the UE); and selecting a SM function entity according to the information of the UE;
Step 604: transmitting a second session creation request message by the MM function entity to the selected SM function entity to request the SM function entity to create a session for the UE, wherein the information carried in the second session creation request message includes the UE being user of IoT and the SM related information;
Step 605: creating a UE context, selecting an UP-GW, and allocating an IP address to the UE by the SM function entity according to the SM related information;
Step 606: transmitting, by the SM function entity, a second session creation response message to the MM function entity, wherein the second session creation response message carries an IP address allocated to the UE;
Step 607: encapsulating, by the MM function entity, data packets according to the IP address allocated to the UE and carried in the received second session creation response message, i.e., determining the IP address allocated to the UE as the Source_IP of the first Data Transfer, and replacing the default IP address or the random IP address, to obtain a second Data Transfer;
Step 608: transmitting, by the MM function entity, the second Data Transfer to the selected SM function entity;
Step 609: forwarding, by the SM function entity, a first Packet-out message to the selected UP-GW, wherein the first Packet-out message carries the second Data Transfer, and the UP-GW may transmit the second Data Transfer to the data network (DN);
Step 610: in a case that the UP-GW receives a third Data Transfer transmitted from the DN to the UE, transmitting a first Packet-in message to the SM function entity, wherein the first Packet-in message carries the third Data Transfer; and
Step 611: forwarding the third Data Transfer to the UE by the SM function entity via the MM function entity and the RAN.

### Fourth example

In the above third example, in the scenario of updating the source IP address in the data by the MM function entity and using a core network which is based on SDN technology, the first-time data transmission process or the data transmission process in which the timer is timed-out is described. However, in the actual data transmission process, there also exists a second-time data transmission process or a data transmission process in which the timer is not timed-out, such as in the fourth example.

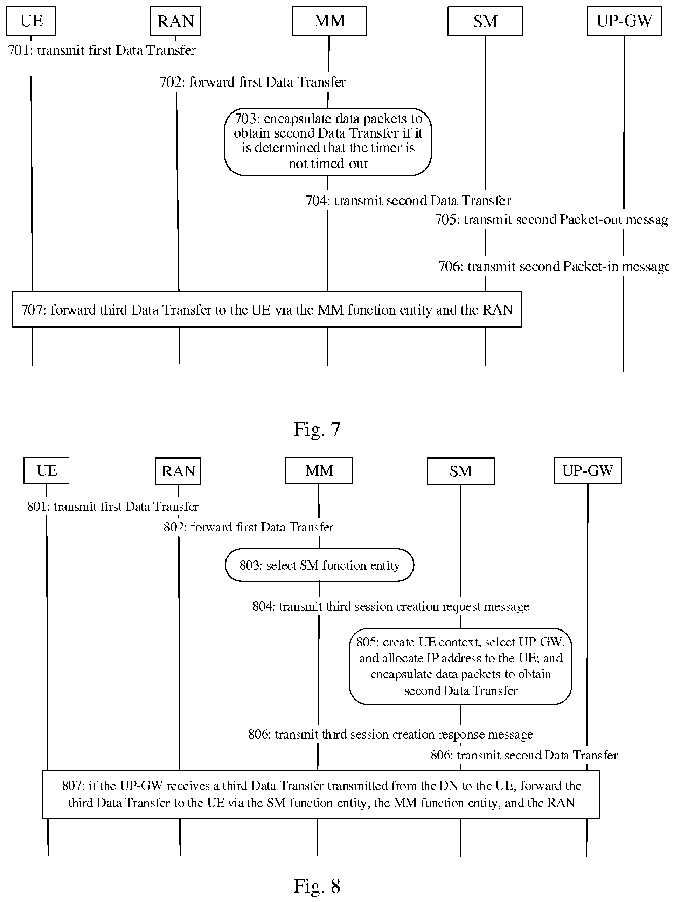

Referring to Fig.7, the data transmission process of the fourth example includes the following steps:
Step 701: encapsulating, by the UE, the data to be transmitted into first Data Transfer,
   wherein the Source_IP of the first Data Transfer is a default IP address or a random IP address; and transmitting the first Data Transfer to a RAN;
Step 702: forwarding, by the RAN, the first Data Transfer to the MM function entity;
Step 703: after the MM function entity receives the first Data Transfer, encapsulating, by the MM function entity, data packets in a case that the timer is not timed-out (for a started timer of the UE), i.e., determining the stored IP address allocated to the UE as the Source_IP of the first Data Transfer, and replacing the default IP address or the random IP address, to obtain a second Data Transfer;
Step 704: transmitting, by the MM function entity, the second Data Transfer to the selected SM function entity;
Step 705: forwarding, by the SM function entity, a second Packet-out message to the selected UP-GW, wherein the second Packet-out message carries the second Data Transfer, and the UP-GW may transmit the second Packet-out message to the data network (DN); Step 706: in a case that the UP-GW receives a third Data Transfer transmitted from the DN to the UE, transmitting a second Packet-in message to the SM function entity, wherein the second Packet-in message carries the third Data Transfer; and
Step 707: forwarding the third Data Transfer to the UE by the SM function entity via the MM function entity and the RAN.

In an example not being part of the present invention the execution body of the IP address configuration method may be a SM function entity. The SM function entity may acquire the first data transmitted by the UE in at least two manners, as described in detail below.

### First manner

In the first manner, the process of the SM function entity acquiring the first data transmitted by the UE may specifically include:
receiving a third request message transmitted by a MM function entity, wherein the third request message carries first data transmitted by the UE to the MM function entity;
and wherein the third request message may be a session creation request message. After receiving the third request message transmitted by the MM function entity, the SM function entity may allocate an IP address to the UE according to the third request message, and determine the IP address allocated to the UE as the source IP address of the first data and replacing the default IP address or the random IP address.

### Second manner

In the first manner, the SM function entity acquires the first data transmitted by the UE by receiving the request message, but in addition to this, the SM function entity may also directly receive the first data transmitted by the UE and forwarded by the MM function entity, for example, as described in the second manner.

In the second manner, the process of the SM function entity acquiring the first data transmitted by the UE may specifically include:
Receiving the first data transmitted by the UE and forwarded by the MM function entity;
wherein prior to receiving the first data transmitted by the UE and forwarded by the MM function entity, the SM function entity may receive a fourth request message transmitted by the MM function entity, wherein the fourth request message is configured to request the SM function entity to allocate an IP address to the UE; allocating an IP address to the UE according to the fourth request message; and transmitting a fourth response message to the MM function entity. The MM function entity forwards the first data transmitted by the UE to the SM function entity, after the MM function entity receives the fourth response message. Before transmitting the fourth request message, the MM function entity may determine, according to the default IP address or the random IP address in the first data, or the timing out of the timer corresponding to the UE, to select a SM function entity for the UE, and select the SM function entity for the UE according to the information of the UE.

After receiving the first data, the SM function entity may determine the source IP address allocated to the UE as the source IP address of the first data, and replace the default IP address or the random IP address. The fourth request message may be a session creation request message, and the fourth response message may be a session creation response message.

In addition, if the MM function entity determines that the timer corresponding to the UE is not timed out, it may directly forward the first data transmitted by the UE to the SM function entity. In this case, after receiving the first data transmitted by the UE and forwarded by the MM function entity, the SM function entity may determine a stored IP address allocated to the UE as the source IP address of the first data, and replace the default IP address or the random IP address.

In the embodiment of the present disclosure, when the SM function entity allocates an IP address to the UE, a user plane gateway may also be selected and a UE context may also be created. After replacing the source IP address of the first data, the SM function entity may also execute the following steps:
transmitting second data to the selected user plane gateway, wherein the second data is obtained by replacing the source IP address of the first data with the IP address allocated by the SM function entity to the UE, and the difference between the first data and the second data only lies in the source IP address: the source IP address of the first data is a default IP address or a random IP address, and the source IP address of the second data is an IP address allocated by the SM function entity to the UE.

In this way, the selected user plane gateway may forward the data carrying the IP address allocated by the SM function entity to the UE to the data network, thereby ensuring a normal data transmission process.

Hereinafter, the data transmission processes of fifth through tenth examples of the present disclosure will be described below with reference to Figs. 8-13.

### Fifth example

In the fifth example, in the scenario of updating the source IP address in the data by the SM function entity, a first-time data transmission process or a data transmission process in which the timer is timed-out is described.

Referring to Fig.8, the data transmission process of the fifth example includes the following steps:
Step 801: encapsulating, by the UE, the data to be transmitted into first Data Transfer,
   wherein the Source_IP of the first Data Transfer is a default IP address or a random IP address; and transmitting the first Data Transfer to a RAN;
Step 802: forwarding, by the RAN, the first Data Transfer to the MM function entity;
Step 803: after the MM function entity receives the first Data Transfer, determining, by the MM function entity, that a SM function entity has to be selected for the UE, according to the default IP address or the random IP address, or in a case that the timer is timed-out (for a started timer of the UE); and selecting a SM function entity according to the information of the UE;
Step 804: transmitting a third session creation request message by the MM function entity to the selected SM function entity to request the SM function entity to create a session for the UE, wherein the information carried in the third session creation request message includes the UE being user of IoT, the SM related information and the first Data Transfer; Step 805: creating a UE context, selecting an UP-GW, and allocating an IP address to the UE by the SM function entity according to the SM related information, and encapsulating data packets by the SM function entity, i.e., determining the IP address allocated to the UE as the Source_IP of the first Data Transfer, and replacing the default IP address or the random IP address to obtain a second Data Transfer;
Step 806: transmitting, by the SM function entity, a third session creation response message to the MM function entity, and simultaneously transmitting the second Data Transfer to the selected UP-GW, wherein the UP-GW may transmit the second Data Transfer to the DN; and
Step 807: in a case that the UP-GW receives a third Data Transfer transmitted from the DN to the UE, forwarding the third Data Transfer to the UE via the SM function entity, the MM function entity, and the RAN.

### Sixth example

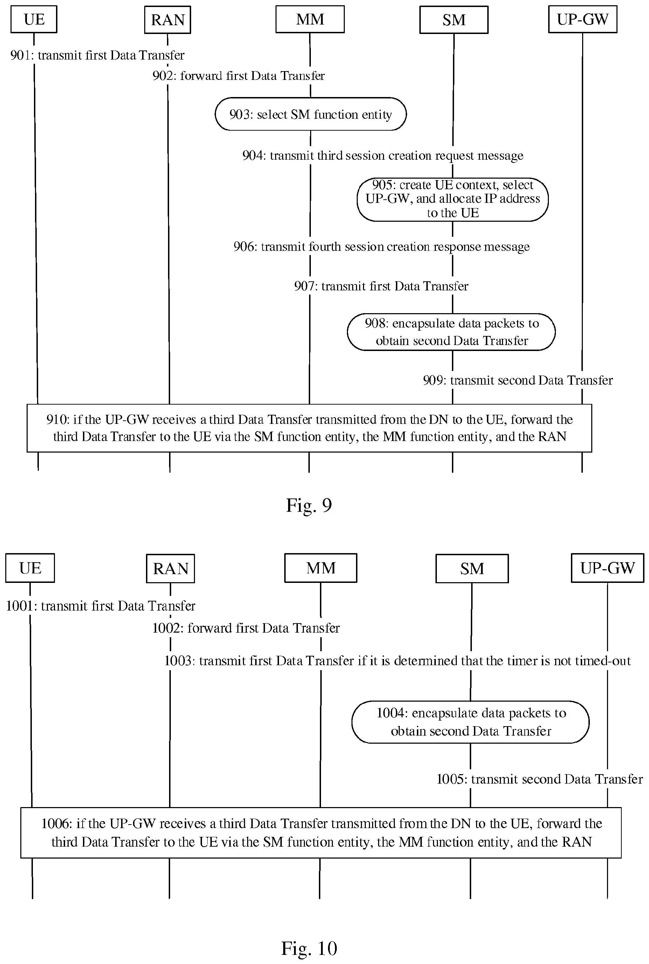

In the above fifth example, the MM function entity transmits the first Data Transfer to the SM function entity by carrying it in the session creation request message, but the MM function entity may also directly transmit the first Data Transfer to the SM function entity, such as in the sixth example. In the sixth example, in the scenario of updating the source IP address in the data by the SM function entity, another first-time data transmission process or a data transmission process in which the timer is timed-out is described. Referring to Fig.9, the data transmission process of the sixth example includes the following steps:
Step 901: encapsulating, by the UE, the data to be transmitted into first Data Transfer,
   wherein the Source_IP of the first Data Transfer is a default IP address or a random IP address; and transmitting the first Data Transfer to a RAN;
Step 902: forwarding, by the RAN, the first Data Transfer to the MM function entity;
Step 903: after the MM function entity receives the first Data Transfer, determining, by the MM function entity, that a SM function entity has to be selected for the UE, according to the default IP address or the random IP address, or in a case that the timer is timed-out (for a started timer of the UE); and selecting a SM function entity according to the information of the UE;
Step 904: transmitting a fourth session creation request message by the MM function entity to the selected SM function entity to request the SM function entity to create a session for the UE, wherein the information carried in the fourth session creation request message includes the UE being user of IoT, and the SM related information;
Step 905: creating a UE context, selecting an UP-GW, and allocating an IP address to the UE by the SM function entity according to the SM related information;
Step 906: transmitting, by the SM function entity, a fourth session creation response message to the MM function entity;
Step 907: transmitting, by the MM function entity, the first Data Transfer to the SM function entity, after the MM function entity receives the fourth session creation response message;
Step 908: encapsulating data packets by the SM function entity after the SM function entity receives the first Data Transfer, i.e., determining the IP address allocated to the UE as the Source_IP of the first Data Transfer, and replacing the default IP address or the random IP address, to obtain a second Data Transfer;
Step 909: transmitting by the SM function entity, the second Data Transfer to the selected UP-GW, wherein the UP-GW may transmit the second Data Transfer to the DN; and
Step 910: in a case that the UP-GW receives a third Data Transfer transmitted from the DN to the UE, forwarding the third Data Transfer to the UE via the SM function entity, the MM function entity, and the RAN.

### Seventh example

In the above fifth and sixth examples, in the scenario of updating the source IP address in the data by the SM function entity, the first-time data transmission process or the data transmission process in which the timer is timed-out is described. However, in the actual data transmission process, there also exists a second-time data transmission process or a data transmission process in which the timer is not timed-out, such as in the seventh example.

Referring to Fig.10, the data transmission process of the seventh example includes the following steps:
Step 1001: encapsulating, by the UE, the data to be transmitted into first Data Transfer,
   wherein the Source_IP of the first Data Transfer is a default IP address or a random IP address; and transmitting the first Data Transfer to a RAN;
Step 1002: forwarding, by the RAN, the first Data Transfer to the MM function entity; Step 1003: transmitting, by the MM function entity, the first Data Transfer to the selected SM function entity after the MM function entity receives the first Data Transfer in a case that the timer is not timed-out (for a started timer of the UE);
Step 1004: encapsulating data packets by the SM function entity, i.e., determining a stored IP address allocated to the UE as the Source_IP of the first Data Transfer, and replacing the default IP address or the random IP address, to obtain a second Data Transfer;
Step 1005: transmitting by the SM function entity, the second Data Transfer to the selected UP-GW, wherein the UP-GW may transmit the second Data Transfer to the DN; and
Step 1006: in a case that the UP-GW receives a third Data Transfer transmitted from the DN to the UE, forwarding the third Data Transfer to the UE via the SM function entity, the MM function entity, and the RAN.

### Eighth example

In the eighth example, in the scenario of updating the source IP address in the data by the SM function entity and using a core network which is based on SDN technology (using an Open Flow protocol), a first-time data transmission process or a data transmission process in which the timer is timed-out is described.

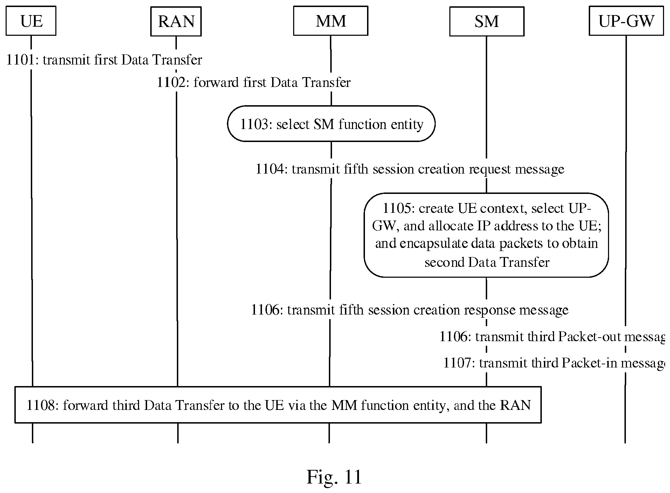

Referring to Fig.11, the data transmission process of the eighth example includes the following steps:
Step 1101: encapsulating, by the UE, the data to be transmitted into first Data Transfer,
   wherein the Source_IP of the first Data Transfer is a default IP address or a random IP address; and transmitting the first Data Transfer to a RAN;
Step 1102: forwarding, by the RAN, the first Data Transfer to the MM function entity;
Step 1103: after the MM function entity receives the first Data Transfer, determining, by the MM function entity, that a SM function entity has to be selected for the UE, according to the default IP address or the random IP address, or in a case that the timer is timed-out (for a started timer of the UE); and selecting a SM function entity according to the information of the UE;
Step 1104: transmitting a fifth session creation request message by the MM function entity to the selected SM function entity to request the SM function entity to create a session for the UE, wherein the information carried in the fifth session creation request message includes the UE being user of IoT, the SM related information and the first Data Transfer; Step 1105: creating a UE context, selecting an UP-GW, and allocating an IP address to the UE by the SM function entity according to the SM related information, and encapsulating data packets by the SM function entity, i.e., determining the IP address allocated to the UE as the Source_IP of the first Data Transfer, and replacing the default IP address or the random IP address, to obtain a second Data Transfer;
Step 1106: transmitting, by the SM function entity, a fifth session creation response message to the MM function entity, and simultaneously transmitting a third Packet-out message to the selected UP-GW, wherein the third Packet-out message carries the second Data Transfer, and the UP-GW may transmit the second Data Transfer to the DN;
Step 1107: in a case that the UP-GW receives a third Data Transfer transmitted from the DN to the UE, transmitting a third Packet-in message to the SM function entity, wherein the third Packet-in message carries the third Data Transfer; and
Step 1108: forwarding the third Data Transfer to the UE by the SM function entity via the MM function entity and the RAN.

### Ninth example

In the ninth example, in the scenario of updating the source IP address in the data by the SM function entity and using a core network which is based on SDN technology (adopting an Open Flow protocol), another first-time data transmission process or a data transmission process in which the timer is timed-out is described.

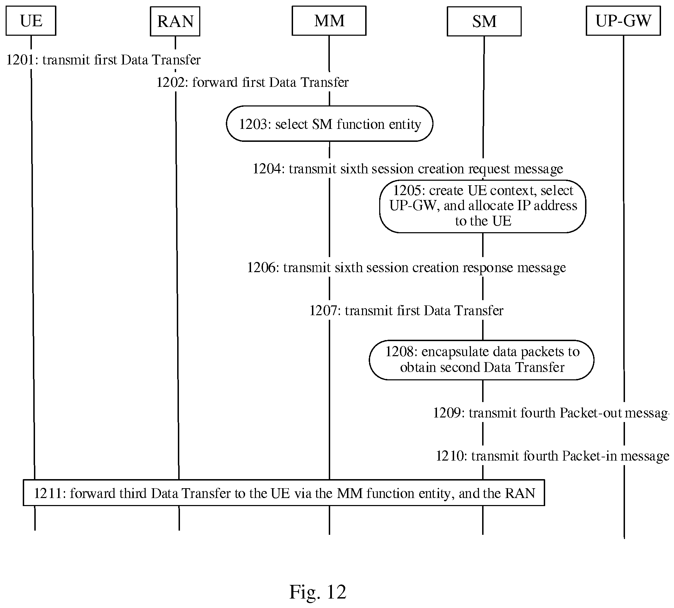

Referring to Fig.12, the data transmission process of the ninth example includes the following steps:
Step 1201: encapsulating, by the UE, the data to be transmitted into first Data Transfer,
   wherein the Source_IP of the first Data Transfer is a default IP address or a random IP address; and transmitting the first Data Transfer to a RAN;
Step 1202: forwarding, by the RAN, the first Data Transfer to the MM function entity;
Step 1203: after the MM function entity receives the first Data Transfer, determining, by the MM function entity, that a SM function entity has to be selected for the UE, according to the default IP address or the random IP address, or in a case that the timer is timed-out (for a started timer of the UE); and selecting a SM function entity according to the information of the UE;
Step 1204: transmitting a sixth session creation request message by the MM function entity to the selected SM function entity to request the SM function entity to create a session for the UE, wherein the information carried in the sixth session creation request message includes the UE being user of IoT, and the SM related information;
Step 1205: creating a UE context, selecting an UP-GW, and allocating an IP address to the UE by the SM function entity according to the SM related information;
Step 1206: transmitting, by the SM function entity, a sixth session creation response message to the MM function entity;
Step 1207: transmitting, by the MM function entity, a first Data Transfer to the SM function entity after the MM function entity receives the sixth session creation response message;
Step 1208: after the SM function entity receives the first Data Transfer, encapsulating, by the SM function entity, data packets, i.e., determining the IP address allocated to the UE as the Source_IP of the first Data Transfer, and replacing the default IP address or the random IP address, to obtain a second Data Transfer;
Step 1209: transmitting, by the SM function entity, a fourth Packet-out message to the selected UP-GW, wherein the fourth Packet-out message carries the second Data Transfer, and the UP-GW may transmit the second Packet-out message to the data network (DN); Step 1210: in a case that the UP-GW receives a third Data Transfer transmitted from the DN to the UE, transmitting a fourth Packet-in message to the SM function entity, wherein the fourth Packet-in message carries the third Data Transfer; and
Step 1211: forwarding the third Data Transfer to the UE by the SM function entity via the MM function entity and the RAN

### Tenth example

In the above eighth and ninth examples, in the scenario of updating the source IP address in the data by the SM function entity and using a core network which is based on SDN technology (adopting an Open Flow protocol), the first-time data transmission process or the data transmission process in which the timer is timed-out is described. However, in the actual data transmission process, there also exists a second-time data transmission process or a data transmission process in which the timer is not timed-out, such as in the tenth example.

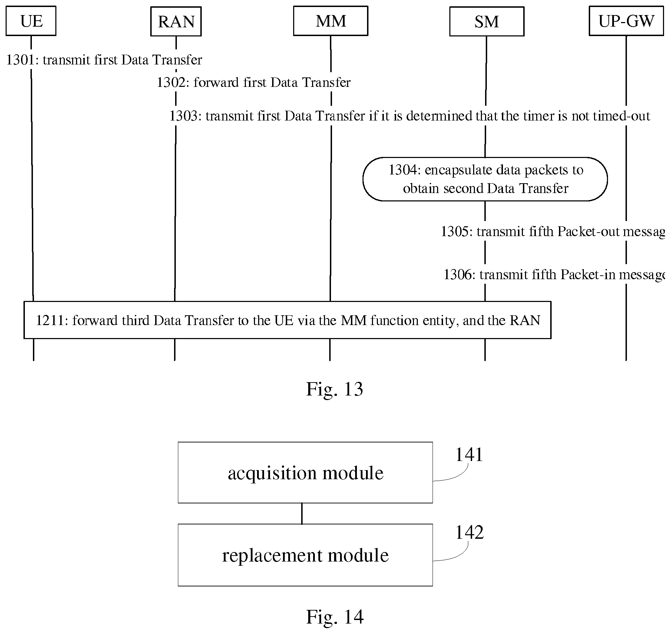

Referring to Fig.13, the data transmission process of the tenth example includes the following steps:
Step 1301: encapsulating, by the UE, the data to be transmitted into first Data Transfer,
   wherein the Source_IP of the first Data Transfer is a default IP address or a random IP address; and transmitting the first Data Transfer to a RAN;
Step 1302: forwarding, by the RAN, the first Data Transfer to the MM function entity;
Step 1303: transmitting, by the MM function entity, the first Data Transfer to the selected SM function entity after the MM function entity receives the first Data Transfer in a case that the timer is not timed-out (for a started timer of the UE);
Step 1304: encapsulating data packets by the SM function entity, i.e., determining a stored IP address allocated to the UE as the Source_IP of the first Data Transfer, and replacing the default IP address or the random IP address, to obtain a second Data Transfer;
Step 1305: transmitting, by the SM function entity, a fifth Packet-out message to the selected UP-GW, wherein the fifth Packet-out message carries the second Data Transfer, and the UP-GW may transmit the second Data Transfer to the DN;
Step 1306: in a case that the UP-GW receives a third Data Transfer transmitted from the DN to the UE, transmitting a fifth Packet-in message to the SM function entity, wherein the fifth Packet-in message carries the third Data Transfer; and
Step 1307: forwarding the third Data Transfer to the UE by the SM function entity via the MM function entity and the RAN.

In the above embodiments, the IP address configuration method of the present disclosure has been described, and the IP address configuration device of the present disclosure will be described below by way of embodiments and the accompanying drawings.

Referring to Fig.14, an embodiment of the present disclosure further provides an IP address configuration device, which is applied to a network function entity, the device including:
an acquisition module 141, configured to acquire first data transmitted by a User Equipment (UE), wherein a source IP address of the first data is a default IP address or a random IP address;
a replacement module 142, configured to determine an IP address allocated by a session management (SM) function entity to the UE as the source IP address of the first data and replace the default IP address or the random IP address.

In the IP address configuration device of the embodiment of the present disclosure, the network function entity determines a source IP address of data transmitted by the UE and replaces the source IP address which is a default IP address or a random IP address, such that the UE is prevented from acquiring in real time the IP address allocated by the SM function entity to the UE, and the source IP address of the transmitted data is prevented from carrying the IP address allocated by the SM function entity to the UE. Therefore, the device can be adapted to a change of an anchor point of the UE, and the IP address can be flexibly configured. Moreover, as compared to existing methods for allocating an IP address to the UE, the present device can reduce the signaling overhead when the IP address is renewed. The UE does not need to perform the configuration and maintenance of the IP address, and the processing load on the UE is reduced. Especially when a service is provided by the network to a group of UEs, it is not required for the network to perform signaling interaction with each UE to complete the configuration of IP address of the UE, thereby reducing signaling overhead of UE configuration.

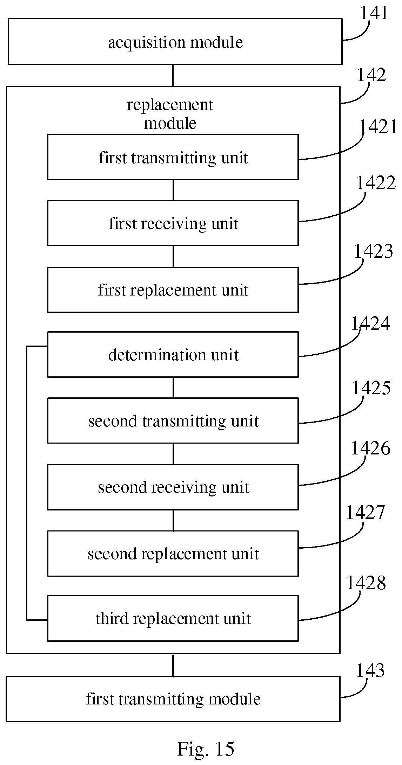

In the present invention the network function entity is a mobility management (MM) function entity, as shown in Fig.15, the replacement module 142 includes:
a first transmitting unit 1421, configured to transmit a first request message to the SM function entity according to the default IP address or the random IP address, to request the SM function entity to allocate an IP address to the UE;
a first receiving unit 1422, configured to receive a first response message transmitted by the SM function entity, wherein the first response message carries an IP address allocated by the SM function entity to the UE; and
a first replacement unit 1423, configured to determine the received IP address allocated to the UE as the source IP address of the first data and replace the default IP address or the random IP address.

In some possible embodiments, as shown in Fig.15, the replacement module 142 further includes:
a determination unit 1424, configured to determine whether a started timer corresponding to the UE is timed out;
a second transmitting unit 1425, configured to transmit a second request message to the SM function entity to request the SM function entity to allocate an IP address to the UE, in a case that the timer is timed out;
a second receiving unit 1426, configured to receive a second response message transmitted by the SM function entity, wherein the second response message carries an IP address allocated by the SM function entity to the UE; and
a second replacement unit 1427, configured to determine the received IP address allocated to the UE as the source IP address of the first data and replace the default IP address or the random IP address.

In some possible embodiments, as shown in Fig.15, the replacement module 142 further includes:
a third replacement unit 1428, configured to determine a stored IP address allocated to the UE as the source IP address of the first data and replace the default IP address or the random IP address, in a case that the timer is not timed out.

In some possible embodiments of the present disclosure, the second transmitting unit 1425 includes:
a selecting sub-unit, configured to select the SM function entity for the UE according to information of the UE, in a case that the timer is timed out; and
a transmitting sub-unit, configured to transmit the second request message to the SM function entity to request the SM function entity to allocate an IP address to the UE.

The information of the UE may include at least one of UE subscription information, UE location information, and UE type information.

In the embodiment of the present disclosure, as shown in Fig.15, the IP address configuration device further includes:
a first transmitting module 143, configured to transmit second data to the SM function entity, wherein the second data is obtained by replacing the source IP address of the first data with the IP address allocated by the SM function entity to the UE.

In the embodiment of the present disclosure, in a case that the network function entity is a SM function entity, the acquisition module 141 is specifically configured to:
receive a third request message transmitted by a MM function entity, wherein the third request message carries first data transmitted by the UE to the MM function entity.

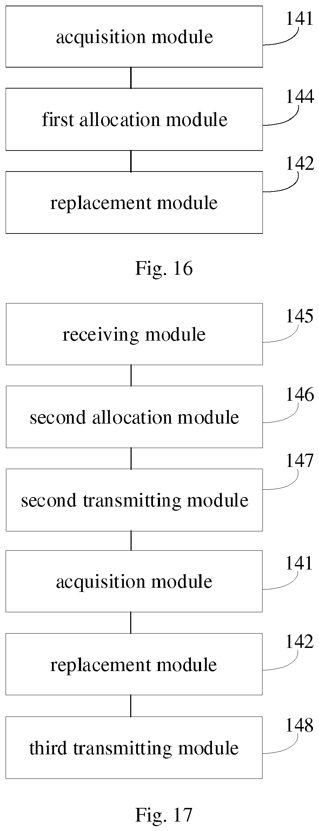

As shown in Fig.16, the IP address configuration device further includes:
a first allocation module 144, configured to allocate an IP address to the UE according to the third request message.

In an example not forming part of the present invention the network function entity is a SM function entity, as shown in Fig.17, the IP address configuration device further includes:
a receiving module 145, configured to receive a fourth request message transmitted by a MM function entity, wherein the fourth request message is configured to request the SM function entity to allocate an IP address to the UE;
a second allocation module 146, configured to allocate an IP address to the UE according to the fourth request message; and
a second transmitting module 147, configured to transmit a fourth response message to the MM function entity.

The acquisition module 141 is specifically configured to:
receive first data transmitted by the UE and forwarded by the MM function entity.

In the embodiment of the present disclosure, in a case that the network function entity is a SM function entity, the acquisition module 141 is specifically configured to:
receive first data transmitted by the UE and forwarded by a MM function entity.

The replacement module 142 is specifically configured to:
determine a stored IP address allocated to the UE as the source IP address of the first data and replace the default IP address or the random IP address.

When the SM function entity allocates an IP address to the UE, a user plane gateway may also be selected, and a UE context may also be created. As shown in Fig.17, the IP address configuration device further includes:
a third transmitting module 148, configured to transmit second data to the user plane gateway, wherein the second data is obtained by replacing the source IP address of the first data with the IP address allocated by the SM function entity to the UE.

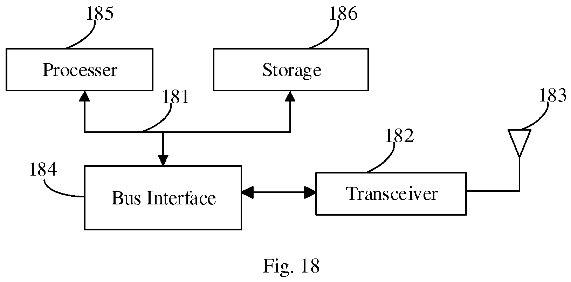

As shown in Fig.18, an embodiment of the present disclosure further provides a network function entity, which includes a bus 181, a transceiver 182, an antenna183, a bus interface 184, a processor 185 and a storage 186.

The processor 185 is configured to read a program in the storage 186 and execute the following process:
controlling the transceiver 182 to acquire first data transmitted by a User Equipment (UE), wherein a source IP address of the first data is a default IP address or a random IP address, and determining an IP address allocated by a session management (SM) function entity to the UE as the source IP address of the first data and replacing the default IP address or the random IP address.

The transceiver 182 is configured to receive and transmit data under control of the processor 185.

In the present invention the network function entity is a mobility management (MM) function entity, the processor 185 is further configured to: transmit a first request message to the SM function entity according to the default IP address or the random IP address, and request the SM function entity to allocate an IP address to the UE; receive a first response message transmitted by the SM function entity, wherein the first response message carries the IP address allocated by the SM function entity to the UE; and determine the received IP address allocated to the UE as the source IP address of the first data and replace the default IP address or the random IP address.

The network function entity is a mobility management (MM) function entity, the processor 185 is further configured to: determine whether a started timer corresponding to the UE is timed out; transmit a second request message to the SM function entity to request the SM function entity to allocate an IP address to the UE, in a case that the timer is timed out; receive a second response message transmitted by the SM function entity, wherein the second response message carries an IP address allocated by the SM function entity to the UE; and determine the received IP address allocated to the UE as the source IP address of the first data and replace the default IP address or the random IP address.

Specifically, the processor 185 is further configured to: determine a stored IP address allocated to the UE as the source IP address of the first data and replace the default IP address or the random IP address, in a case that the timer is not timed out.

Specifically, the processor 185 is further configured to: select the SM function entity for the UE according to information of the UE, in a case that the timer is timed out; and transmit the second request message to the SM function entity to request the SM function entity to allocate an IP address to the UE.

Specifically, the information of the UE includes at least one of UE subscription information, UE location information, and UE type information.

Specifically, the processor 185 is further configured to: transmit second data to the SM function entity, wherein the second data is obtained by replacing the source IP address of the first data with the IP address allocated by the SM function entity to the UE. Specifically, in a case that the network function entity is a SM function entity, the processor 185 is further configured to: receive a third request message transmitted by a MM function entity, wherein the third request message carries first data transmitted by the UE to the MM function entity; and allocate an IP address to the UE according to the third request message.

Specifically, in an example not forming part of the present invention the network function entity is a SM function entity, the processor 185 is further configured to: receive a fourth request message transmitted by a MM function entity, wherein the fourth request message is configured to request the SM function entity to allocate an IP address to the UE; allocate an IP address to the UE according to the fourth request message; transmit a fourth response message to the MM function entity; and receive the first data transmitted by the UE and forwarded by the MM function entity.

Specifically, the processor 185 is further configured to: receive first data transmitted by the UE and forwarded by a MM function entity; and determine a stored IP address allocated to the UE as the source IP address of the first data and replace the default IP address or the random IP address.

Specifically, when the SM function entity allocates an IP address to the UE, a user plane gateway may also be selected, and the processor 185 is further configured to: transmit second data to the user plane gateway, wherein the second data is obtained by replacing the source IP address of the first data with the IP address allocated by the SM function entity to the UE.

In Fig.18, a bus architecture (represented by the bus 181) may include any number of interconnected buses and bridges. Various circuits including one or more processors represented by the processor 185 and storages represented by the storage 186 are linked together by the bus 181. The bus 181 may also link various other circuits together, such as peripherals, voltage regulators, and power management circuits, as is known in the art. Therefore, no further description is given herein. The bus interface 184 provides an interface between the bus 181 and the transceiver 182. The transceiver 182 may be one element, or a plurality of elements, such as a plurality of receivers and transmitters, which provide a unit for communicating with various other devices over a transmission medium. Data processed by the processor 185 is transmitted over a wireless medium via the antenna 183. Further, the antenna 183 also receives data and transmits the data to the processor 185.

The processor 185 manages the bus 181 and the normal processing, and provides various functions including timing, peripheral interfaces, voltage regulation, power management, and other control functions. The storage 186 may be configured to store data used by the processor 185 in performing operations.

In some possible embodiments, the processor 185 may be a CPU, an ASIC, a FPGA, or a CPLD.

An embodiment of the present disclosure further provides a computer readable storage medium, on which a computer program (instruction) is stored, wherein the computer readable storage medium is applied to a network function entity, and when the program (instruction) is executed by a processor, the following steps are implemented:
acquiring first data transmitted by a User Equipment (UE), wherein a source IP address of the first data is a default IP address or a random IP address; and
determining an IP address allocated by a session management (SM) function entity to the UE as the source IP address of the first data and replacing the default IP address or the random IP address.

The network function entity is a mobility management (MM) function entity, and when the program (instruction) is executed by the processor, the following steps may further be implemented: transmitting a first request message to the SM function entity according to the default IP address or the random IP address, to request the SM function entity to allocate an IP address to the UE; receiving a first response message transmitted by the SM function entity, wherein the first response message carries the IP address allocated by the SM function entity to the UE; and determining the received IP address allocated to the UE as the source IP address of the first data and replacing the default IP address or the random IP address.

The network function entity is a MM function entity, and when the program (instruction) is executed by the processor, the following steps may further be implemented: determining whether a started timer corresponding to the UE is timed out; transmitting a second request message to the SM function entity to request the SM function entity to allocate an IP address to the UE, in a case that the timer is timed out; receiving a second response message transmitted by the SM function entity, wherein the second response message carries an IP address allocated by the SM function entity to the UE; and determining the received IP address allocated to the UE as the source IP address of the first data and replacing the default IP address or the random IP address.

In some possible embodiments, when the program (instruction) is executed by the processor, the following step may further be implemented: determining a stored IP address allocated to the UE as the source IP address of the first data and replacing the default IP address or the random IP address, in a case that the timer is not timed out.

In some possible embodiments, when the program (instruction) is executed by the processor, the following steps may further be implemented: selecting the SM function entity for the UE according to information of the UE, in a case that the timer is timed out; and transmitting the second request message to the SM function entity to request the SM function entity to allocate an IP address to the UE.

In some possible embodiments, the information of the UE includes at least one of UE subscription information, UE location information, and UE type information.

In some possible embodiments, when the program (instruction) is executed by the processor, the following step may further be implemented: transmitting second data to the SM function entity, wherein the second data is obtained by replacing the source IP address of the first data with the IP address allocated by the SM function entity to the UE.

In some possible embodiments, the network function entity is a SM function entity, and when the program (instruction) is executed by the processor, the following steps may further be implemented: receiving a third request message transmitted by a MM function entity, wherein the third request message carries first data transmitted by the UE to the MM function entity; and allocating an IP address to the UE according to the third request message.

In some possible examples not being part of the present invention the network function entity is a SM function entity, and when the program (instruction) is executed by the processor, the following steps may further be implemented: receiving a fourth request message transmitted by a MM function entity, wherein the fourth request message is configured to request the SM function entity to allocate an IP address to the UE; allocating an IP address to the UE according to the fourth request message; transmitting a fourth response message to the MM function entity; and receiving the first data transmitted by the UE and forwarded by the MM function entity.

In some possible embodiments, the network function entity is a SM function entity, and when the program (instruction) is executed by the processor, the following steps may further be implemented: receiving first data transmitted by the UE and forwarded by a MM function entity; and determining a stored IP address allocated to the UE as the source IP address of the first data and replacing the default IP address or the random IP address. In some possible embodiments, when the SM function entity allocates an IP address to the UE, a user plane gateway is selected, and when the program (instruction) is executed by the processor, the following step may further be implemented: transmitting second data to the user plane gateway, wherein the second data is obtained by replacing the source IP address of the first data with the IP address allocated by the SM function entity to the UE. The computer readable medium includes both permanent medium and non-permanent medium, as well as mobile medium and immobile medium, and information storage may be implemented by any method or technology. The information may be computer readable instructions, data structures, modules of programs, or other data. Examples of computer storage medium include, but are not limited to, phase change random access memory (PRAM), static random access memory (SRAM), dynamic random access memory (DRAM), other types of random access memory (RAM), read only memory (ROM), electrically erasable programmable read only memory (EEPROM), flash memory or other memory technologies, compact disk read only memory (CD-ROM), digital versatile disk (DVD) or other optical storages, cartridge magnetic tape, magnetic tape storage or other magnetic storage devices or any other non-transmission medium, which can be configured to store information that can be accessed by a computing device. As defined herein, the computer readable media does not include transitory computer readable media, such as modulated data signals and carrier waves.

It is noted that the terms "include", "contain", or any other variants thereof used in the present disclosure are intended to encompass a non-exclusive inclusion, such that a process, a method, an article, or a device including a series of elements only not include those elements, but also include other elements that are not explicitly listed, or elements that are inherent to such process, method, article, or device. An element that is defined by the phrase "including a ..." does not exclude the presence of additional identical elements in the process, method, article or device that includes the element.

The serial numbers of the above embodiments of the present disclosure are merely for the purpose of description, and do not represent the advantages and disadvantages of the embodiments.

Through the description of the above embodiments, a person skilled in the art can clearly understand that the method of the above embodiments can be implemented by means of software plus a necessary general hardware platform, and of course can also be implemented by means of hardware, but in many cases the former is a better implementation. Based on such understanding, the essential parts of the technical solution of the present disclosure, or in other words, the parts that make contribution to the related art, may be embodied in the form of a software product. The computer software product is stored in a storage medium (such as ROM/RAM, magnetic disk, and optical disk), and includes several instructions for causing a terminal device (which may be a cell phone, a computer, a server, an air conditioner, or a network device, etc.) to perform the methods described in various embodiments of the present disclosure.

## Claims

1. An IP address configuration method, applied to a network function entity in a 5G mobile communication system, the method comprising:
acquiring first data transmitted by the UE, wherein a source IP address of the first data is a default IP address or a random IP address; and
determining an IP address allocated by a session management, SM, function entity to the UE as the source IP address of the first data and replacing the default IP address or the random IP address;
wherein the network function entity is a mobility management, MM, function entity, and the step of determining the IP address allocated by the SM function entity to the UE as the source IP address of the first data and replacing the default IP address or the random IP address comprises:
transmitting a first request message to the SM function entity according to the default IP address or the random IP address, to request the SM function entity to allocate an IP address to the UE;
receiving a first response message transmitted by the SM function entity, wherein the first response message carries the IP address allocated by the SM function entity to the UE; and
determining the received IP address allocated to the UE as the source IP address of the first data and replacing the default IP address or the random IP address.

2. The method according to claim 1, wherein the step of determining the IP address allocated by the SM function entity to the UE as the source IP address of the first data and replacing the default IP address or the random IP address further comprises:
determining whether a started timer corresponding to the UE is timed out;
transmitting a second request message to the SM function entity to request the SM function entity to allocate an IP address to the UE, in a case that the timer is timed out;
receiving a second response message transmitted by the SM function entity, wherein the second response message carries an IP address allocated by the SM function entity to the UE; and
determining the received IP address allocated to the UE as the source IP address of the first data and replacing the default IP address or the random IP address.

3. The method according to claim 2, wherein the step of determining the IP address allocated by the SM function entity to the UE as the source IP address of the first data and replacing the default IP address or the random IP address further comprises:
determining a stored IP address allocated to the UE as the source IP address of the first data and replacing the default IP address or the random IP address, in a case that the timer is not timed out.

4. The method according to claim 2, wherein the step of transmitting the second request message to the SM function entity to request the SM function entity to allocate an IP address to the UE in a case that the timer is timed out comprises:
selecting the SM function entity for the UE according to information of the UE, in a case that the timer is timed out; and
transmitting the second request message to the SM function entity to request the SM function entity to allocate an IP address to the UE.

5. The method according to claim 4, wherein the information of the UE comprises at least one of UE subscription information, UE location information, and UE type information.

6. The method according to any one of claims 1 to 5, further comprising:
transmitting second data to the SM function entity, wherein the second data is obtained by replacing the source IP address of the first data with the IP address allocated by the SM function entity to the UE.

7. The method according to claim 1, wherein the network function entity is a SM function entity, and the step of acquiring the first data transmitted by the UE comprises:
receiving a third request message transmitted by a MM function entity, wherein the third request message carries the first data transmitted by the UE to the MM function entity; and wherein
after the step of acquiring the first data transmitted by the UE, and prior to the step of determining the IP address allocated by the SM function entity to the UE as the source IP address of the first data and replacing the default IP address or the random IP address, the method further comprises:
allocating an IP address to the UE according to the third request message; or
the network function entity is a SM function entity, and prior to the step of acquiring the first data transmitted by the UE, the method further comprises:
receiving a fourth request message transmitted by a MM function entity, wherein the fourth request message is configured to request the SM function entity to allocate an IP address to the UE;
allocating an IP address to the UE according to the fourth request message; and
transmitting a fourth response message to the MM function entity; and
wherein the step of acquiring first data transmitted by the UE comprises:
receiving first data transmitted by the UE and forwarded by the MM function entity.

8. The method according to claim 1, wherein the network function entity is a SM function entity, and the step of acquiring the first data transmitted by the UE comprises:
receiving first data transmitted by the UE and forwarded by a MM function entity; and
the step of determining the IP address allocated by the SM function entity to the UE as the source IP address of the first data and replacing the default IP address or the random IP address comprises:
determining a stored IP address allocated to the UE as the source IP address of the first data and replacing the default IP address or the random IP address.

9. The method according to claim 7 or 8, wherein when the SM function entity allocates an IP address to the UE, a user plane gateway is selected, and the method further comprises:
transmitting second data to the user plane gateway, wherein the second data is obtained by replacing the source IP address of the first data with the IP address allocated by the SM function entity to the UE.

10. An IP address configuration device, applied to a network function entity in a 5G mobile communication system, the device comprising:
an acquisition module, configured to acquire first data transmitted by the UE, wherein a source IP address of the first data is a default IP address or a random IP address; and
a replacement module, configured to determine an IP address allocated by a session management, SM, function entity to the UE as the source IP address of the first data and replacing the default IP address or the random IP address;
wherein the network function entity is a mobility management, MM, function entity, and the replacement module comprises:
a first transmitting unit, configured to transmit a first request message to the SM function entity according to the default IP address or the random IP address, to request the SM function entity to allocate an IP address to the UE;
a first receiving unit, configured to receive a first response message transmitted by the SM function entity, wherein the first response message carries an IP address allocated by the SM function entity to the UE; and
a first replacement unit, configured to determine the received IP address allocated to the UE as the source IP address of the first data and replace the default IP address or the random IP address.

11. The device according to claim 10, wherein the replacement module further comprises:
a determination unit, configured to determine whether a started timer corresponding to the UE is timed out;
a second transmitting unit, configured to transmit a second request message to the SM function entity to request the SM function entity to allocate an IP address to the UE, in a case that the timer is timed out;
a second receiving unit, configured to receive a second response message transmitted by the SM function entity, wherein the second response message carries an IP address allocated by the SM function entity to the UE; and
a second replacement unit, configured to determine the received IP address allocated to the UE as the source IP address of the first data and replace the default IP address or the random IP address.

12. The device according to claim 11, wherein the replacement module further comprises:
a third replacement unit, configured to determine a stored IP address allocated to the UE as the source IP address of the first data and replace the default IP address or the random IP address, in a case that the timer is not timed out.

13. The device according to claim 11, wherein the second transmitting unit comprises:
a selecting sub-unit, configured to select the SM function entity for the UE according to information of the UE, in a case that the timer is timed out; and
a transmitting sub-unit, configured to transmit the second request message to the SM function entity to request the SM function entity to allocate an IP address to the UE.

## Patentansprüche

1. IP-Adressenkonfigurationsverfahren, das bei einer Netzwerkfunktionseinheit in einem 5G-Mobilkommunikationsystem angewendet wird, wobei das Verfahren Folgendes umfasst:
Erlangen erster Daten, die von der UE übertragen werden, wobei eine Quellen-IP-Adresse der ersten Daten eine Vorgabe-ID-Adresse oder eine Zufalls-IP-Adresse ist; und
Bestimmen einer IP-Adresse, die der UE von einer Sitzungsmanagement-, SM, Funktionseinheit als die Quellen-IP-Adresse der ersten Daten zugeordnet ist, und Ersetzen der Vorgabe-ID-Adresse oder der Zufalls-IP-Adresse;
wobei die Netzwerkfunktionseinheit eine Mobilitätsmanagement-, MM, Funktionseinheit ist und der Schritt zum Bestimmen der IP-Adresse, die der UE von der SM-Funktionseinheit als die Quellen-IP-Adresse der ersten Daten zugeordnet ist, und Ersetzen der Vorgabe-ID-Adresse oder der Zufalls-IP-Adresse umfasst:
Übertragen einer ersten Aufforderungsnachricht an die SM-Funktionseinheit gemäß der Vorgabe-ID-Adresse oder der Zufalls-IP-Adresse, um die SM-Funktionseinheit aufzufordern, der UE eine IP-Adresse zuzuordnen;
Empfangen einer ersten Antwortnachricht, die von der SM-Funktionseinheit übertragen wird, wobei die erste Antwortnachricht die IP-Adresse trägt, die der UE von der SM-Funktionseinheit zugeordnet ist; und
Bestimmen der empfangenen IP-Adresse, die der UE zugeordnet ist, als die Quellen-IP-Adresse der ersten Daten und Ersetzen der Vorgabe-ID-Adresse oder der Zufalls-IP-Adresse.

2. Verfahren nach Anspruch 1, wobei der Schritt zum Bestimmen der IP-Adresse, die der UE von der SM-Funktionseinheit als die Quellen-IP-Adresse der ersten Daten zugeordnet ist, und Ersetzen der Vorgabe-ID-Adresse oder der Zufalls-IP-Adresse weiter umfasst:
Bestimmen, ob ein gestarteter Zeitgeber, der der UE entspricht, abgelaufen ist;
Übertragen einer zweiten Aufforderungsnachricht an die SM-Funktionseinheit, um die SM-Funktionseinheit aufzufordern, der UE eine IP-Adresse zuzuordnen, falls der Zeitgeber abgelaufen ist;
Empfangen einer zweiten Antwortnachricht, die von der SM-Funktionseinheit übertragen wird, wobei die zweite Antwortnachricht eine IP-Adresse trägt, die der UE von der SM-Funktionseinheit zugeordnet ist; und
Bestimmen der empfangenen IP-Adresse, die der UE zugeordnet ist, als die Quellen-IP-Adresse der ersten Daten und Ersetzen der Vorgabe-ID-Adresse oder der Zufalls-IP-Adresse.

3. Verfahren nach Anspruch 2, wobei der Schritt zum Bestimmen der IP-Adresse, die der UE von der SM-Funktionseinheit als die Quellen-IP-Adresse der ersten Daten zugeordnet ist, und Ersetzen der Vorgabe-ID-Adresse oder der Zufalls-IP-Adresse weiter umfasst:
Bestimmen einer gespeicherten IP-Adresse, die der UE zugeordnet ist, als die Quellen-IP-Adresse der ersten Daten und Ersetzen der Vorgabe-ID-Adresse oder der Zufalls-IP-Adresse, falls der Zeitgeber nicht abgelaufen ist.

4. Verfahren nach Anspruch 2, wobei der Schritt zum Übertragen der zweiten Aufforderungsnachricht an die SM-Funktionseinheit, um die SM-Funktionseinheit aufzufordern, der UE eine IP-Adresse zuzuordnen, falls der Zeitgeber abgelaufen ist, umfasst:
Auswählen der SM-Funktionseinheit für die UE gemäß Informationen der UE, falls der Zeitgeber abgelaufen ist; und
Übertragen der zweiten Aufforderungsnachricht an die SM-Funktionseinheit, um die SM-Funktionseinheit aufzufordern, der UE eine IP-Adresse zuzuordnen.

5. Verfahren nach Anspruch 4, wobei die Informationen der UE mindestens eines von UE-Teilnehmerinformationen, UE-Standortinformationen und UE-Typinformationen umfassen.

6. Verfahren nach einem der Ansprüche 1 bis 5, weiter umfassend:
Übertragen zweiter Daten an die SM-Funktionseinheit, wobei die zweiten Daten durch Ersetzen der Quellen-IP-Adresse der ersten Daten mit der IP-Adresse, die der UE von der SM-Funktionseinheit zugeordnet ist, erhalten werden.

7. Verfahren nach Anspruch 1, wobei die Netzwerkfunktionseinheit eine SM-Funktionseinheit ist und der Schritt zum Erlangen der ersten Daten, die von der UE übertragen werden, umfasst:
Empfangen einer dritten Aufforderungsnachricht, die von einer MM-Funktionseinheit übertragen wird, wobei die dritte Aufforderungsnachricht die ersten Daten trägt, die von der UE an die MM-Funktionseinheit übertragen werden; und wobei
nach dem Schritt zum Erlangen der ersten Daten, die von der UE übertragen werden, und vor dem Schritt zum Bestimmen der IP-Adresse, die der UE von der SM-Funktionseinheit als die Quellen-IP-Adresse der ersten Daten zugeordnet ist, und Ersetzen der Vorgabe-ID-Adresse oder der Zufalls-IP-Adresse das Verfahren weiter umfasst:
Zuordnen einer IP-Adresse zu der UE gemäß der dritten Aufforderungsnachricht; oder
die Netzwerkfunktionseinheit eine SM-Funktionseinheit ist und vor dem Schritt zum Erlangen der ersten Daten, die von der UE übertragen werden, das Verfahren weiter umfasst:
Empfangen einer vierten Aufforderungsnachricht, die von einer MM-Funktionseinheit übertragen wird, wobei die vierte Aufforderungsnachricht konfiguriert ist, die SM-Funktionseinheit aufzufordern, der UE eine IP-Adresse zuzuordnen;
Zuordnen einer IP-Adresse zu der UE gemäß der vierten Aufforderungsnachricht; und
Übertragen einer vierten Antwortnachricht an die MM-Funktionseinheit; und
wobei der Schritt zum Erlangen erster Daten, die von der UE übertragen werden, umfasst:
Empfangen erster Daten, die von der UE übertragen werden und von der MM-Funktionseinheit weitergeleitet werden.

8. Verfahren nach Anspruch 1, wobei die Netzwerkfunktionseinheit eine SM-Funktionseinheit ist und der Schritt zum Erlangen der ersten Daten, die von der UE übertragen werden, umfasst:
Empfangen erster Daten, die von der UE übertragen werden und von einer MM-Funktionseinheit weitergeleitet werden; und
der Schritt zum Bestimmen der IP-Adresse, die der UE von der SM-Funktionseinheit als die Quellen-IP-Adresse der ersten Daten zugeordnet ist, und Ersetzen der Vorgabe-ID-Adresse oder der Zufalls-IP-Adresse umfasst:
Bestimmen einer gespeicherten IP-Adresse, die der UE zugeordnet ist, als die Quellen-IP-Adresse der ersten Daten und Ersetzen der Vorgabe-ID-Adresse oder der Zufalls-IP-Adresse.

9. Verfahren nach Anspruch 7 oder 8, wobei, wenn die SM-Funktionseinheit der UE eine IP-Adresse zuordnet, ein Gateway auf Benutzerebene ausgewählt wird, und das Verfahren weiter umfasst:
Übertragen zweiter Daten zu dem Gateway auf Benutzerebene, wobei die zweiten Daten durch Ersetzen der Quellen-IP-Adresse der ersten Daten durch die IP-Adresse, die der UE von der SM-Funktionseinheit zugeordnet ist, erhalten werden.

10. IP-Adressenkonfigurationsvorrichtung, die bei einer Netzwerkfunktionseinheit in einem 5G-Mobilkommunikationsystem angewendet wird, wobei die Vorrichtung Folgendes umfasst:
ein Erlangungsmodul, das konfiguriert ist, erste Daten, die von der UE übertragen werden, zu erlangen, wobei eine Quellen-IP-Adresse der ersten Daten eine Vorgabe-ID-Adresse oder eine Zufalls-IP-Adresse ist; und
ein Ersetzungsmodul, das konfiguriert ist, eine IP-Adresse, die der UE von einer Sitzungsmanagement-, SM, Funktionseinheit als die Quellen-IP-Adresse der ersten Daten zugeordnet ist, zu bestimmen und die Vorgabe-ID-Adresse oder der Zufalls-IP-Adresse zu ersetzen;
wobei die Netzwerkfunktionseinheit eine Mobilitätsmanagement-, MM, Funktionseinheit ist und das Ersetzungsmodul umfasst:
eine erste Übertragungseinheit, die konfiguriert ist, eine erste Aufforderungsnachricht an die SM-Funktionseinheit gemäß der Vorgabe-ID-Adresse oder der Zufalls-IP-Adresse zu übertragen, um die SM-Funktionseinheit aufzufordern, der UE eine IP-Adresse zuzuordnen;
eine erste Empfangseinheit, die konfiguriert ist, eine erste Antwortnachricht, die von der SM-Funktionseinheit übertragen wird, zu empfangen, wobei die erste Antwortnachricht eine IP-Adresse trägt, die der UE von der SM-Funktionseinheit zugeordnet ist; und
eine erste Ersetzungseinheit, die konfiguriert ist, die empfangene IP-Adresse, die der UE zugeordnet ist, als die Quellen-IP-Adresse der ersten Daten zu bestimmen und die Vorgabe-ID-Adresse oder die Zufalls-IP-Adresse zu ersetzen.

11. Vorrichtung nach Anspruch 10, wobei das Ersetzungsmodul weiter umfasst:
eine Bestimmungseinheit, die konfiguriert ist zu bestimmen, ob ein gestarteter Zeitgeber, der der UE entspricht, abgelaufen ist;
eine zweite Übertragungseinheit, die konfiguriert ist, eine zweite Aufforderungsnachricht an die SM-Funktionseinheit zu übertragen, um die SM-Funktionseinheit aufzufordern, der UE eine IP-Adresse zuzuordnen, falls der Zeitgeber abgelaufen ist;
eine zweite Empfangseinheit, die konfiguriert ist, eine zweite Antwortnachricht, die von der SM-Funktionseinheit übertragen wird, zu empfangen, wobei die zweite Antwortnachricht eine IP-Adresse trägt, die der UE von der SM-Funktionseinheit zugeordnet ist; und
eine zweite Ersetzungseinheit, die konfiguriert ist, die empfangene IP-Adresse, die der UE zugeordnet ist, als die Quellen-IP-Adresse der ersten Daten zu bestimmen und die Vorgabe-ID-Adresse oder die Zufalls-IP-Adresse zu ersetzen.

12. Vorrichtung nach Anspruch 11, wobei das Ersetzungsmodul weiter umfasst:
eine dritte Ersetzungseinheit, die konfiguriert ist, eine gespeicherte IP-Adresse, die der UE als die Quellen-IP-Adresse der ersten Daten zugeordnet ist, zu bestimmen und die Vorgabe-ID-Adresse oder die Zufalls-IP-Adresse zu ersetzen, falls der Zeitgeber nicht abgelaufen ist.

13. Vorrichtung nach Anspruch 11, wobei die zweite Übertragungseinheit umfasst:
eine Auswählteileinheit, die konfiguriert ist, die SM-Funktionseinheit für die UE gemäß Informationen der UE auszuwählen, falls der Zeitgeber abgelaufen ist; und
eine Übertragungsteileinheit, die konfiguriert ist, die zweite Aufforderungsnachricht an die SM-Funktionseinheit zu übertragen, um die SM-Funktionseinheit aufzufordern, der UE eine IP-Adresse zuzuordnen.

## Revendications

1. Procédé de configuration d'adresse IP, appliqué à une entité de fonction de réseau dans un système de communication mobile 5G, le procédé comprenant :
l'acquisition de premières données transmises par l'UE, dans lequel une adresse IP source des premières données est une adresse IP par défaut ou une adresse IP aléatoire ; et
la détermination d'une adresse IP attribuée par une entité de fonction de gestion de session, SM, à l'UE comme l'adresse IP source des premières données et le remplacement de l'adresse IP par défaut ou de l'adresse IP aléatoire ;
dans lequel l'entité de fonction de réseau est une entité de fonction de gestion de mobilité, MM, et l'étape de détermination de l'adresse IP attribuée par l'entité de fonction SM à l'UE comme l'adresse IP source des premières données et de remplacement de l'adresse IP par défaut ou de l'adresse IP aléatoire comprend :
la transmission d'un premier message de demande à l'entité de fonction SM en fonction de l'adresse IP par défaut ou de l'adresse IP aléatoire, pour demander à l'entité de fonction SM d'attribuer une adresse IP à l'UE ;
la réception d'un premier message de réponse transmis par l'entité de fonction SM, dans lequel le premier message de réponse porte l'adresse IP attribuée par l'entité de fonction SM à l'UE ; et
la détermination de l'adresse IP reçue attribuée à l'UE comme l'adresse IP source des premières données et le remplacement de l'adresse IP par défaut ou de l'adresse IP aléatoire.

2. Procédé selon la revendication 1, dans lequel l'étape de détermination de l'adresse IP attribuée par l'entité de fonction SM à l'UE comme l'adresse IP source des premières données et de remplacement de l'adresse IP par défaut ou de l'adresse IP aléatoire comprend en outre :
la détermination du fait qu'un temporisateur déparé correspondant à l'UE a expiré ou non ;
la transmission d'un deuxième message de demande à l'entité de fonction SM pour demander à l'entité de fonction SM d'allouer une adresse IP à l'UE, dans un cas où le temporisateur a expiré ;
la réception d'un deuxième message de réponse transmis par l'entité de fonction SM, dans lequel le deuxième message de réponse porte une adresse IP attribuée par l'entité de fonction SM à l'UE ; et
la détermination de l'adresse IP reçue attribuée à l'UE comme l'adresse IP source des premières données et le remplacement de l'adresse IP par défaut ou de l'adresse IP aléatoire.

3. Procédé selon la revendication 2, dans lequel l'étape de détermination de l'adresse IP attribuée par l'entité de fonction SM à l'UE comme l'adresse IP source des premières données et de remplacement de l'adresse IP par défaut ou de l'adresse IP aléatoire comprend en outre :
la détermination d'une adresse IP stockée attribuée à l'UE comme l'adresse IP source des premières données et le remplacement de l'adresse IP par défaut ou de l'adresse IP aléatoire, dans un cas où le temporisateur n'a pas expiré.

4. Procédé selon la revendication 2, dans lequel l'étape de transmission du deuxième message de demande à l'entité de fonction SM pour demander à l'entité de fonction SM d'attribuer une adresse IP à l'UE dans un cas où le temporisateur a expiré comprend :
la sélection de l'entité de fonction SM pour l'UE en fonction d'informations de l'UE, dans un cas où le temporisateur a expiré ; et
la transmission du deuxième message de demande à l'entité de fonction SM pour demander à l'entité de fonction SM d'allouer une adresse IP à l'UE.

5. Procédé selon la revendication 4, dans lequel les informations de l'UE comprennent au moins une parmi des informations d'abonnement d'UE, des informations de localisation d'UE et des informations de type d'UE.

6. Procédé selon l'une quelconque des revendications 1 à 5, comprenant en outre :
la transmission de secondes données à l'entité de fonction SM, dans lequel les secondes données sont obtenues en remplaçant l'adresse IP source des premières données par l'adresse IP attribuée par l'entité de fonction SM à l'UE.

7. Procédé selon la revendication 1, dans lequel l'entité de fonction de réseau est une entité de fonction SM et l'étape d'acquisition des premières données transmises par l'UE comprend :
la réception d'un troisième message de demande transmis par une entité de fonction MM, dans lequel le troisième message de demande porte les premières données transmises à l'UE à l'entité de fonction MM ; et dans lequel
après l'étape d'acquisition des premières données transmises par l'UE et avant l'étape de détermination de l'adresse IP attribuée par l'entité de fonction SM à l'UE comme l'adresse IP source des premières données et de remplacement de l'adresse IP par défaut ou de l'adresse IP aléatoire, le procédé comprend en outre :
l'attribution d'une adresse IP à l'UE en fonction du troisième message de demande ; ou
l'entité de fonction de réseau est une entité de fonction SM et, avant l'étape d'acquisition des premières données transmises par l'UE, le procédé comprend en outre :
la réception d'un quatrième message de demande transmis par une entité de fonction MM, dans lequel le quatrième message de demande est configuré pour demander à l'entité de fonction SM d'attribuer une adresse IP à l'UE ;
l'attribution d'une adresse IP à l'UE en fonction du quatrième message de demande ; et
la transmission d'un quatrième message de réponse à l'entité de fonction MM ; et
dans lequel l'étape d'acquisition des premières données transmises par l'UE comprend :
la réception des premières données transmises par l'UE et transférées par l'entité de fonction MM.

8. Procédé selon la revendication 1, dans lequel l'entité de fonction de réseau est une entité de fonction SM et l'étape d'acquisition des premières données transmises par l'UE comprend :
la réception de premières données transmises par l'UE et transférées par une entité de fonction MM ; et
l'étape de détermination de l'adresse IP attribuée par l'entité de fonction SM à l'UE comme l'adresse IP source des premières données et de remplacement de l'adresse IP par défaut ou de l'adresse IP aléatoire comprend :
la détermination d'une adresse IP stockée attribuée à l'UE comme l'adresse IP source des premières données et le remplacement de l'adresse IP par défaut ou de l'adresse IP aléatoire.

9. Procédé selon la revendication 7 ou 8, dans lequel, quand l'entité de fonction SM attribue une adresse IP à l'UE, une passerelle de plan utilisateur est sélectionnée et le procédé comprend en outre :
la transmission de secondes données à la passerelle de plan utilisateur, dans lequel les secondes données sont obtenues en remplaçant l'adresse IP source des premières données par l'adresse IP attribuée par l'entité de fonction SM à l'UE.

10. Dispositif de configuration d'adresse IP, appliqué à une entité de fonction de réseau dans un système de communication mobile 5G, le dispositif comprenant :
un module d'acquisition configuré pour acquérir des premières données transmises par l'UE, dans lequel une adresse IP source des premières données est une adresse IP par défaut ou une adresse IP aléatoire ; et
un module de remplacement configuré pour déterminer une adresse IP attribuée par une entité de fonction de gestion de session, SM, à l'UE comme l'adresse IP source des premières données et remplacer l'adresse IP par défaut ou l'adresse IP aléatoire ;
dans lequel l'entité de fonction de réseau est une entité de fonction de gestion de mobilité, MM, et le module de remplacement comprend :
une première unité de transmission configurée pour transmettre un premier message de demande à l'entité de fonction SM en fonction de l'adresse IP par défaut ou de l'adresse IP aléatoire, pour demander à l'entité de fonction SM d'attribuer une adresse IP à l'UE ;
une première unité de réception configurée pour recevoir un premier message de réponse transmis par l'entité de fonction SM, dans lequel le premier message de réponse porte une adresse IP attribuée par l'entité de fonction SM à l'UE ; et
une première unité de remplacement configurée pour déterminer l'adresse IP reçue attribuée à l'UE comme l'adresse IP source des premières données et remplacer l'adresse IP par défaut ou l'adresse IP aléatoire.

11. Dispositif selon la revendication 10, dans lequel le module de remplacement comprend en outre :
une unité de détermination configurée pour déterminer si un temporisateur déparé correspondant à l'UE a expiré ;
une seconde unité de transmission configurée pour transmettre un deuxième message de demande à l'entité de fonction SM pour demander à l'entité de fonction SM d'allouer une adresse IP à l'UE, dans un cas où le temporisateur a expiré ;
une seconde unité de réception configurée pour recevoir un deuxième message de réponse transmis par l'entité de fonction SM, dans lequel le deuxième message de réponse porte une adresse IP attribuée par l'entité de fonction SM à l'UE ; et
une deuxième unité de remplacement configurée pour déterminer l'adresse IP reçue attribuée à l'UE comme l'adresse IP source des premières données et remplacer l'adresse IP par défaut ou l'adresse IP aléatoire.

12. Dispositif selon la revendication 11, dans lequel le module de remplacement comprend en outre :
une troisième unité de remplacement configurée pour déterminer une adresse IP stockée attribuée à l'UE comme l'adresse IP source des premières données et remplacer l'adresse IP par défaut ou l'adresse IP aléatoire, dans un cas où le temporisateur n'a pas expiré.

13. Dispositif selon la revendication 11, dans lequel la seconde unité de transmission comprend :
une sous-unité de sélection configurée pour sélectionner l'entité de fonction SM pour l'UE en fonction d'informations de l'UE, dans un cas où le temporisateur a expiré ; et
une sous-unité de transmission configurée pour transmettre le deuxième message de demande à l'entité de fonction SM pour demander à l'entité de fonction SM d'allouer une adresse IP à l'UE.
